## Europäisches Patentamt
## European Patent Office
## Office européen des brevets

(19)

(11) Veröffentlichungsnummer: **0 163 161**
**B1**

(12) **EUROPÄISCHE PATENTSCHRIFT**

(45) Veröffentlichungstag der Patentschrift:
**19.04.89**

(51) Int. Cl.⁴: **B 23 Q 7/14**

(21) Anmeldenummer: **85105385.0**

(22) Anmeldetag: **03.05.85**

(54) Vorrichtung zur Übertragung von Werkstückpaletten.

(30) Priorität: **28.05.84 DE 8416193 U**

(43) Veröffentlichungstag der Anmeldung:
**04.12.85 Patentblatt 85/49**

(45) Bekanntmachung des Hinweises auf die Patenterteilung:
**19.04.89 Patentblatt 89/16**

(84) Benannte Vertragsstaaten:
**CH DE FR GB IT LI**

(56) Entgegenhaltungen:
**DE-A-2 800 951**
**DE-A-3 407 099**
**DE-U-7 729 830**
**DE-U-8 416 193**

**PROSPEKT DER FA. MASCHINENFABRIK
EIMELDINGEN, Band 117, Nr. 1, Januar 1984,
München; "Die Freiheit der Variation...",
WERKSATT UND BETRIEB
PATENT ABSTRACTS OF JAPAN, Band 8, Nr. 108
(M-297) 1545 , 19. Mai 1984
PATENT ABSTRACTS OF JAPAN, Band 7, Nr. 59 (M-
199) 1204 , 11. März 1983**

(73) Patentinhaber: **MAHO Aktiengesellschaft, Postfach
1280 Tiroler Strasse 85, D-8962 Pfronten (DE)**

(72) Erfinder: **Babel, Werner, Achweg 19, D-8962
Pfronten (DE)**

(74) Vertreter: **Patentanwälte Beetz sen. - Beetz jun.
Timpe - Siegfried - Schmitt- Fumian,
Steinsdorfstrasse 10, D-8000 München 22 (DE)**

## Beschreibung

Die Erfindung betrifft eine Vorrichtung zur Übertragung einer Werkstück-Palette zwischen einem Palettenbahnhof und dem Werkstücktisch einer Werkzeugmaschine der im Oberbegriff des Patentanspruchs 1 angegebenen Gattung.

Aus dem DE-U-7 729 830 ist eine derartige Vorrichtung bekannt, die einen um seine Hochachse verdrehbaren Palettenträger für jeweils zwei Paletten aufweist. Auf dem Palettenträger sind als Längsführungen dienende Tragschienen sowie mehrere hydraulische Zylinder montiert. Durch Verdrehen des in Draufsicht rechteckigen Palettenträgers bis vor den Werkstücktisch wird einer der Hydraulikzylinder ausgefahren und ein am vorderen Ende seiner Kolbenstange vorgesehener Schieber mit der auf dem Werkstücktisch befindlichen Palette in Eingriff gebracht. Durch eine Einziehbewegung dieses Hydraulikzylinders wird diese Palette vom Werkstücktisch auf die eine der beiden Aufnahmepositionen des Palettenträgers gezogen. Nach einer erneuten Verdrehung des Palettenträgers um seine Hochachse kann diese Palette durch erneute Betätigung des Hydraulikzylinders auf einen neben der Werkzeugmaschine angeordneten Palettenständer überführt werden. Ähnliche Wechselvorgänge können mit Hilfe eines zweiten Hydraulikzylinders und der am anderen Endabschnitt des Palettenträgers angeordneten Längsführungen ausgeführt werden. Wesentliche Nachteile dieser bekannten Übergabevorrichtung sind der für die Drehbewegung des Palettenträgers benötigte Platzbedarf, die Notwendigkeit einer Verdrehbewegun des Palettenträgers um seine Hochachse für jeden Übergabezyklus und schließlich der durch die Verwendung mehrerer hydraulischer Zylinder bedingte technische Aufwand.

Aus dem Dokument "Patent Abstracts of Japan", Band 8, Nr. 108, 19. Mai 1984; & JP-A-5 919 653 ist eine andere Übergabevorrichtung für Werkstückpaletten bekannt, bei welcher ein um seine Hochachse verdrehbarer rechteckiger Palettenträger ebenfalls zur Aufnahme von zwei Paletten ausgelegt ist. Auf dem Palettenträger sind durchgehende Längsführungen sowie zwei Endlosketten montiert, mit deren Schiebern jeweils eine Palette von einem benachbarten Palettenständer bzw. von einem Werkstücktisch auf den zuvor in die entsprechende Winkellage gebrachten Palettenträger überführt werden kann. Auch diese bekannte Vorrichtung hat die Nachteile eines relativ großen Platzbedarfes und des u. a. durch die Verwendung von jeweils zwei gesondert anzutreibenden Endlosketten bedingten technischen Aufwandes.

Aufgabe der Erfindung ist es, eine Übergabevorrichtung für Werkstückpaletten der eingangs genannten Art zu schaffen, die bei konstruktiv einfachem Aufbau einen relativ geringen Platz beansprucht und die Überführung einer Palette von der Übergabestation eines Palettenbahnhofs auf den Werkstücktisch in einem ununterbrochene Bewegungsablauf ermöglicht.

Diese Aufgabe wird erfindungsgemäß durch die kennzeichnenden Merkmale des Patentanspruchs 1 gelöst.

Durch die um die Hochachse verdrehbare Ausbildung des rechteckigen Palettenträgers kann dieser während der Bearbeitungszeit der einzelnen Werkstücke in eine Ruhestellung verdreht werden, in welcher er sich längs zwischen dem Palettenbahnhof und der Vorderkante des Werkstücktisches erstreckt. Der Werkstücktisch ist damit vom Palettenträger entkoppelt und kann die zur Werkstückbearbeitung notwendigen Bewegungen kollisionsfrei ausführen. Gleiches gilt auch für die Bewegungen der Paletten auf dem Palettenbahnhof. Zum Wechseln einer Palette mit einem aufgespannten Werkstück wird der Werkstücktisch in eine Wechselposition verfahren, in welcher seine Spannfläche mit der Oberfläche des Palettenträgers fluchtet. Der Palettenträger wird aus seiner Ruhestellung um 90° verdreht, so daß seine Längsführungen nun den Abstand zwischen der Spannfläche des Werkstücktisches und der Übergabestation des Palettenbahnhofs überbrücken. In dieser Stellung wird durch motorische Betätigung der auf dem Palettenträger vorgesehenen Schieber die auf dem Werkstücktisch befindliche Palette mit dem fertig bearbeiteten Werkstück ergriffen und in einem durchgehenden Bewegungsablauf über die Längsführungen auf den Leerplatz im Palettenbahnhof verschoben. Durch erneute Verdrehung des Palettenträgers um 90° wird seine Verbindung zum Palettenbahnhof gelöst, so daß eine neue Palette von einem unbearbeiteten Werkstück in die Übergabestation fahren kann. Eine erneute Verdrehung des Palettenträgers stellt die Verbindung zum Werkstücktisch wieder her, so daß die an der Endloskette montierten Schieber die Palette mit dem unbearbeiteten Werkstück erfassen und zweckmäßig in zwei Schritten auf den Werkstücktisch in die gewünschte Bearbeitungsposition überführen können. In einem ersten Bewegungsschritt gelangt einer der Schieber an einem vorderen Mitnehmeranschlag der Palette in Eingriff, wodurch die Palette entweder vom Werkstücktisch oder von der Übergabestation abgezogen und über eine gewisse Strecke in den Führungen des Palettenträgers bewegt wird. Sobald dieser Schieber über die hintere Umlenkrolle der Endloskette läuft, kommt er automatisch vom Mitnehmeranschlag der Palette frei. Gleichzeitig gelangt jedoch dernächstfolgende Schieber an einem weiteren Mitnehmeranschlag der Palette in Eingriff und schiebt damit die Palette über eine weitere Strecke auf den Träger sowie daran anschließend entweder auf den Werkstücktisch oder auf die Übergabestation in die jeweils vorgesehene Position vor. Eine erneute Verdrehung des Palettenträgers bewirkt seine Entkopplung vom Werkstücktisch ebenso wie vom Palettenbahnhof.

Demgemäß liegt das wesentliche Funktionsmerkmal der erfindungsgemäßen Übertragungsvorrichtung u. a. darin, für die einzelnen Überführungsvorgänge eine sichere Verbindung zwischen dem Werkstücktisch und der Übergabestation des Palettenbahnhofs herzustellen, und diese Verbindung während der Werkstückbearbeitung und des Palettentransports im Bahnhof so weit zu unterbrechen, daß sich beide Aggregate frei bewegen können.

Im folgenden wird ein besonders zweckmäßiges Ausführungsbeispiel der Erfindung anhand der Zeichnung im einzelnen beschrieben. Es zeigen:

Fig. 1   eine Draufsicht auf ein Bearbeitungszentrum mit Palettenbahnhof und Übergabevorrichtung;

Fig. 2   schematisch eine Seitenansicht einer Übergabevorrichtung;

Fig. 3   einen Axialschnitt durch die Übergabevorrichtung nach Fig. 2.

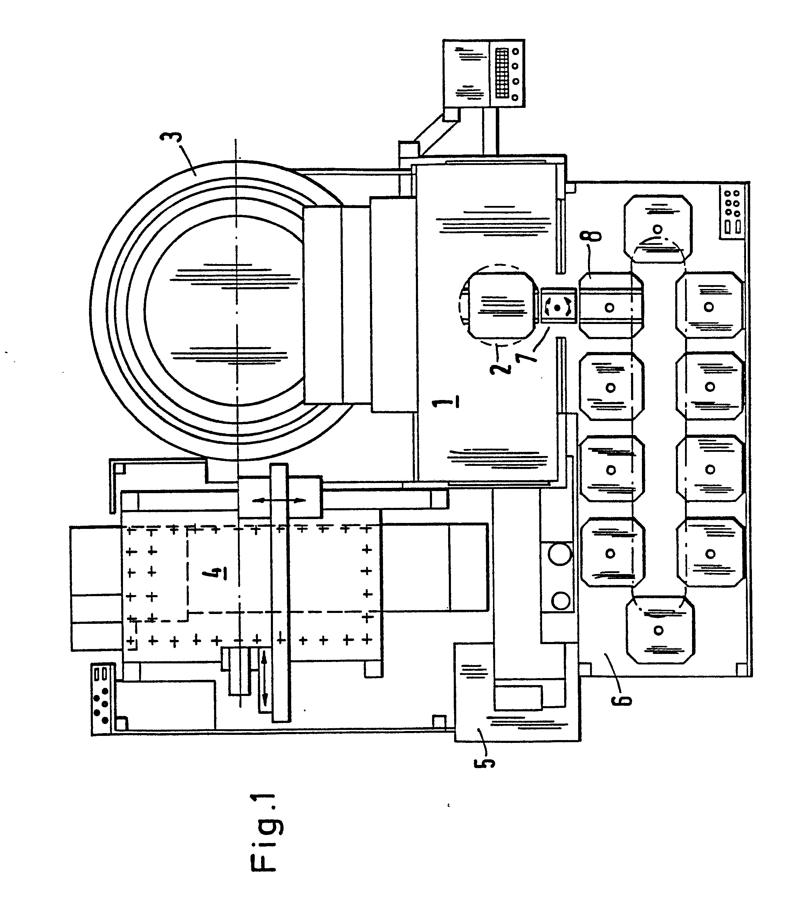

Das in Fig. 1 in Draufsicht schematisch dargestellte Bearbeitungszentrum umfaßt die eigentliche Bearbeitungsmaschine 1 mit Werkstücktisch 2, einem Tellermagazin 3, einem Werkzeugspeicher 4, einem Spänekasten 5, einem Palettenbahnhof 6 und der erfindungsgemäßen Übergabevorrichtung 7, die zwischen dem Werkstücktisch 2 und einer Paletten-Überführungsstelle 8 angeordnet ist.

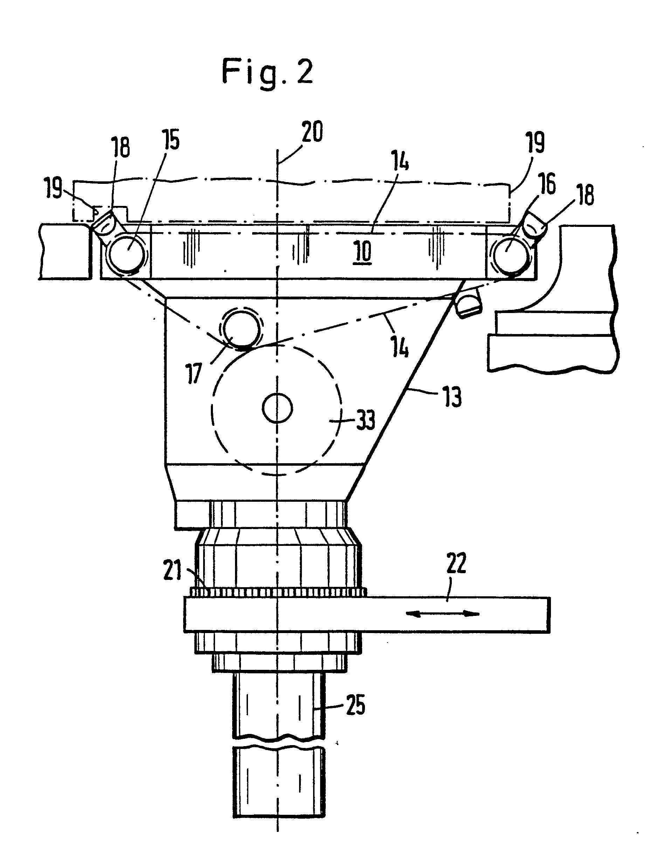

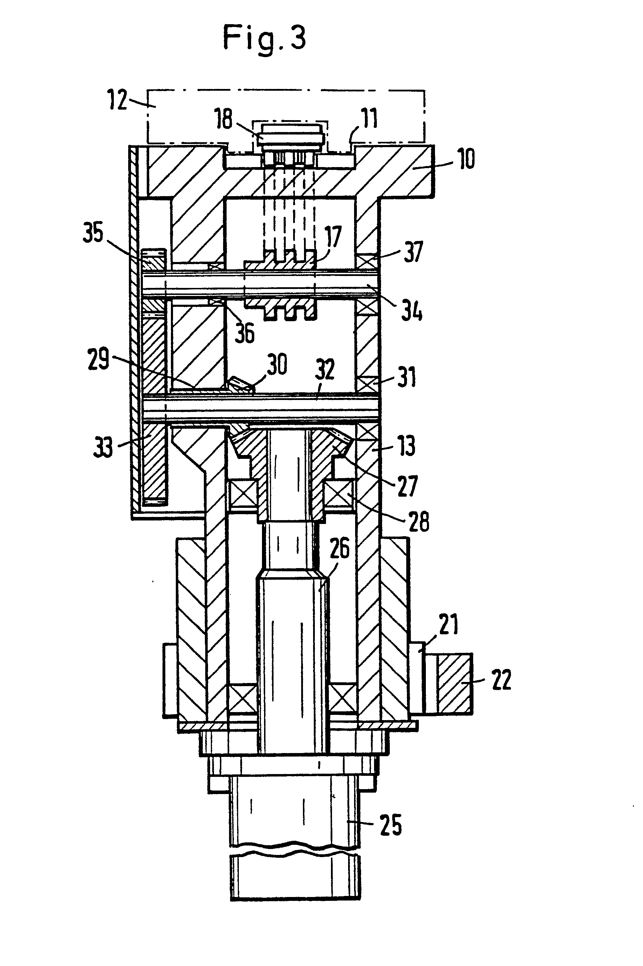

Wie aus den Fig. 2 und 3 ersichtlich, enthält die Übergabevorrichtung einen Palettenträger 10, der Längsführungen 11 für eine Palette 12 aufweist (Fig. 3). Dieser Palettenträger 10 ist auf einem Gehäuse 13 abgestützt bzw. mit diesem einstückig ausgeführt. Mittig im Palettenträger verläuft das Obertrum einer Endloskette 14, die um zwei Umlenkrollen 15, 16 umläuft und von einem im Inneren des Gehäuses 13 gelagerten Kettenrad 17 angetrieben wird. An der Endloskette 14 sind in vorbestimmten Abständen Schieber 18 befestigt, die an entsprechenden Mitnehmeranschlägen 19 n den Paletten 12 bei einer Bewegung der Endloskette 14 angreifen und damit die Paletten 11 in Längsrichtun des Palettenschiebers bewegen. Der Palettenträger is um die Hochachse 20 verdrehbar, und zwar bei dem dar estellten Ausführungsbeispiel mittels eines Zahntriebes 21, 22. Im unteren Teil des Gehäuses ist außen ein Zahnkranz 21 angeordnet, der mit der Verzahnung ei er in Richtung des Doppelpfeils translatorisch bewegbaren Zahnstange 22 in Eingriff steht. Angetrieben wird diese Zahnstange entweder über ein - nicht dargestelltes - Ritzel oder über Hydraulikzylinder.

Wie aus Fig. 3 ersichtlich, erfolgt der Antrieb des Kettenrades 17 von einem Motor 25, dessen Abtriebswelle 26 an ihrem freien Ende ein Kegelrad 21 aufweist, dessen nach unten verlängerte Hülse in Lagern 28 im Gehäuse 13 gelagert ist. Das Kegelrad 27 kämmt mit einem Kegelritzel 30, das auf einer im Gehäuse in Lagern 29, 31 drehbaren Welle 32 aufgekeilt ist. Am Ende der Welle 32 ist ein Stirnrad 33 befestigt, das mit einem auf der Welle 34 des Kettenrades 17 aufgekeilten Stirnritzel 35 kämmt. Die Welle 34 ist parallel zur Welle 32 in Lagern 36, 37 im Gehäuse 13 gelagert.

**Patentansprüche**

1. Vorrichtung zur Übertragung einer Werkstück-Palette zwischen einem Palettenbahnhof und dem Werkstücktisch einer Werkzeugmaschine, bestehend aus einem zwischen dem Palettenbahnhof und dem Werkstücktisch angeordneten rechteckigen Palettenträger (10), der um seine vertikale Achse (20) motorisch verdrehbar ist und Längsführungen (11) sowie motorisch betätigte Schieber (18) den Transport einer Palette in einer Längsrichtung über den Palettenträger aufweist, dadurch gekennzeichnet, daß der rechteckige Palettenträger (10) zwischen einer Ruhestellung, in welcher er vom Werkstücktisch (2) und von der Übergabestation (8) des Palettenbahnhofs (6) entkoppelt ist, und einer Übergabestellung, in welcher seine Längsführungen (11) den Abstand zwischen dem Werkstücktisch (2) und der Übergabestation (8) überbrücken, um jeweils 90° verdrehbar ist, daß im Palettenträger eine motorisch angetriebene Endloskette (14) montiert ist, deren Obertrum parallel zu den Längsführungen (11) auf dem Palettenträger (10) verläuft, und daß die Schieber (18) mit solchen Zwischenabständen an der Endloskette (14) montiert sind, daß einer der Schieber (18) in einem ersten Bewegungszyklus an einem vorderen Mitnehmeranschlag (19) der Palette (12) angreift, um sie von der Übergabestation (8) bzw. dem Werkstücktisch (2) auf den Palettenträger zu überführen, und daß der nächstfolgende Schieber (18) an einem weiteren Mitnehmeranschlag (19) der Palette angreift und diese vom Palettenträger (10) auf den Werkstücktisch (2) bzw. die Übergabestation (8) überschiebt.

2. Vorrichtung nach Anspruch 1, dadurch gekennzeichnet, daß der Palettenträger (10) zusammen mit seinem Gehäuse mittels eines Zahnstangentriebs (21, 22) in jeder Drehrichtung um 90° verdrehbar ist.

3. Vorrichtung nach Anspruch 1, dadurch gekennzeichnet, daß die Endloskette (14) von einem in der Hochachse (20) angeordneten Elektromotor (25) über ein Kegelradpaar (27, 29) und ein untersetzendes Stirnradpaar (33, 35) angetrieben ist.

## Claims

1. Device for transferring a workpiece pallet between a pallet rail station and the workpiece table of a machine tool, consisting of a rectangular pallet carrier (10) located between the pallet rail station and the workpiece table and rotatable by motor operation about its vertical axis (20) and comprising longitudinal guides (11) together with motor-operated slides (18) for the conveyance of a pallet in a longitudinal direction by means of the pallet carrier,
characterised in that
the rectangular pallet carrier (10) is rotatable through 90° at a time between an idle position, in which it is uncoupled from the workpiece table (2) and from the transfer point (8) of the pallet rail station (6), and a transfer position, in which its longitudinal guides (11) bridge the gap between the workpiece table (2) and the transfer point (8) that in the pallet carrier a motor-driven endless chain (14) is mounted whose upper side runs parallel with the longitudinal guides (11) on the pallet carrier (10), and
that the slides (18) are mounted at intervals on the chain belt (14) such that one of the slides (18) engages in an initial movement cycle with a front cam stop (19) on the pallet (12) in order to transfer the latter from the transfer point (8) or the workpiece table (2) onto the pallet carrier, and that the next following slide (18) engages with a further cam stop (19) on the pallet and moves the latter from the pallet carrier (10) onto the workpiece table (2) or the transfer point (8).

2. Device according to claim 1,
characterised in that
the pallet carrier (10) together with its housing is rotatable through 90° in each rotation direction by means of a rack and pinion gear (21, 22).

3. Device according to claim 1,
characterised in that
the endless chain (14) is driven by an electric motor (25) located in the vertical axis (20) via a bevel wheel pair (27, 29) and a step-down spur gear pair (33, 35).

## Revendications

1. Dispositif pour transférer une palette porte-pièce entre une gare de palettes et la table porte-pièce d'une machine-outil, composé d'un porte-palette (10) de forme rectangulaire, interposé entre la gare de palettes et la table porte-pièce, qui peut tourner autour de son axe vertical (20) sous l'action d'un moteur et qui présente des guides longitudinaux (11) ainsi que des poussoirs (12) actionnés par un moteur, qui servent à transporter une palette dans la direction longitudinale au-dessus du porte-palette,
caractérisé
en ce que le porte-palette rectangulaire (10) peut tourner de 90° entre une position de repos, dans laquelle il est découplé de la table porte-pièce (2) et du poste d'échange (8) de la gare de palettes (6), et une position de sortie, dans laquelle ces guides longitudinaux (11) couvrent la distance entre la table porte-pièce (2) et le poste d'échange (8),
en ce que, dans le porte-palette, est montée une chaîne sans fin (14) entraînée par un moteur, dont le brin supérieur s'étend sur le porte-palette (10), parallèlement aux guides longitudinaux (11), et
en ce que les poussoirs (18) sont montés sur la chaîne sans fin (14) à des écartements tels que l'un des poussoirs (18) attaque une butée d'entraînement avant (19) de la palette (12) dans un premier cycle de mouvement, pour faire passer cette palette du poste d'échange (18) ou de la table porte-pièce (2) au porte-palette, et que le poussoir (18) suivant attaque une autre butée d'entraînement (19) de la palette et amène cette palette du porte-palette (10) à la table porte-pièce (2) ou au poste d'échange (8).

2. Dispositif selon la revendication 1,
caractérisé
en ce que le porte-palette (10) peut être tourné de 90° dans chaque sens, conjointement avec son carter, au moyen d'un entraînement à crémaillère (21, 22).

3. Dispositif selon la revendication 1,
caractérisé
en ce que la chaîne sans fin (14) est entraînée par un moteur électrique (25) disposé sur l'axe vertical (20), par l'intermédiaire d'un couple de pignons coniques (27, 29) et d'un couple de roues cylindriques (33, 35) qui forment réducteur.

# Fig.1

# Fig. 2

# Fig.3